# EUROPÄISCHE PATENTSCHRIFT

(11) **EP 2 915 223 B1**
(45) Veröffentlichungstag und Bekanntmachung des Hinweises auf die Patenterteilung: **02.09.2020**
(21) Anmeldenummer: 13762125.6
(22) Anmeldetag: 13.09.2013
(51) Int. Cl.: H01R 13/703

(54) **ELEKTRISCHER STECKER UND ENERGIEÜBERTRAGUNGSANORDNUNG**
ELECTRICAL PLUG AND ENERGY TRANSMISSION ARRANGEMENT
CONNECTEUR ÉLECTRIQUE ET ENSEMBLE DE TRANSFERT D'ÉNERGIE

(30) Priorität: 05.11.2012 DE 102012220102
(43) Veröffentlichungstag der Anmeldung: 09.09.2015
(73) Patentinhaber: Robert Bosch GmbH, 70442 Stuttgart (DE)
(72) Erfinder: MITTAG, Andreas, 71706 Markgroeningen (DE); FAYE, Ian, 70193 Stuttgart (DE); ECKERT, Bernd, 71665 Vaihingen An Der Enz (DE)
(86) Internationale Anmeldenummer: PCT/EP2013/068987
(87) Internationale Veröffentlichungsnummer: WO 2014/067701

(56) Entgegenhaltungen:
- WO-A1-2008/125813
- DE-A1- 3 212 983
- DE-A1-102006 047 039
- JP-A- 2008 305 684
- US-A1- 2012 091 824

## Beschreibung

Die vorliegende Erfindung betrifft einen elektrischen Stecker mit einer Anschlusseinheit, die zum Übertragen von elektrischer Energie mit einer elektrischen Leitung koppelbar ist, und wenigstens einem elektrischen Kontaktstift, der einen Steckabschnitt und einen Kopplungsabschnitt aufweist, wobei der Kopplungsabschnitt mit der Anschlusseinheit elektrisch gekoppelt ist und wobei der Steckabschnitt dazu ausgebildet ist, eine lösbare Steckverbindung mit einer zugeordneten Kontaktbuchse bereitzustellen.

Ferner betrifft die vorliegende Erfindung eine Energieübertragungsanordnung mit einem elektrischen Stecker der oben genannten Art und einer elektrischen Leitung, die mit der Anschlusseinheit des elektrischen Steckers elektrisch gekoppelt ist.

### Stand der Technik

Die Druckschrift DE 10 2006 047 039 A1 offenbart eine Kontaktverbindung für eine lösbare elektrische Verbindung eines elektrischen Antriebsmotors in einem Kraftfahrzeugs, In einer Steckkontaktverbindung mit mindestens einem Kontaktstift ist ein Permanentmagnet vorgesehen, der beim Einstecken der Steckkontaktverbindung in ein Kontaktteil einen Reed-Kontakt in dem Kontaktteil schließen kann um eine Energieübertragung freizugeben.

Die Druckschrift JP 2008 305684 A offenbart einen Stecker für eine Energieübertragung, der dazu ausgelegt ist, eine unvollständige Verbindung des Steckers zu erkennen.

Die Druckschrift US2012/091824 A1 offenbart eine Stromversorgungseinrichtung für einen elektrischen Wagen, die einen Bewegungssensor umfasst.

Auf dem Gebiet der Kraftfahrzeugantriebstechnik ist es allgemein bekannt, eine elektrische Maschine als alleinigen Antrieb oder gemeinsam mit einem Antriebsmotor eines anderen Typs (Hybridantrieb) zu verwenden. In derartigen Elektro- oder Hybridfahrzeugen werden typischerweise elektrische Maschinen als Antriebsmotor verwendet, die durch einen elektrischen Energiespeicher, wie z.B. einen Akkumulator, mit elektrischer Energie versorgt werden. Die elektrischen Energiespeicher von Elektrofahrzeugen, oder Plug-in-Hybridfahrzeugen, müssen regelmäßig je nach Ladezustand mit einem elektrischen Energieversorgungsnetz verbunden werden, um den Energiespeicher mit elektrischer Energie zu laden. Zur Übertragung der elektrischen Energie von einer Ladestation auf das Fahrzeug kann bspw. ein induktiv gekoppeltes drahtloses Energieübertragungssystem oder ein Kabel verwendet werden. Bei Verwendung eines Kabels ist es besonders benutzerfreundlich, wenn das Elektrofahrzeug bzw. das Hybridfahrzeug mit jeder beliebigen Standardsteckdose verbunden werden kann, um die Traktionsbatterie aufzuladen. Bei derartigen Standardsteckdosen ist jedoch keine spezielle Sperrvorrichtung vorhanden, die ein einfaches Lösen des Ladekabels verhindert. Damit kann das Ladekabel unter voller Last des Ladevorgangs (ca. 3,6 kW) abgezogen werden. Dies kann jedoch zu einer Lichtbogenbildung zwischen dem Stecker des Ladekabels und der Steckdose führen. Infolgedessen können der Stecker und die Steckdose beschädigt werden. Außerdem besteht eine Verbrennungsgefahr für den Anwender.

Bei Verwendung der normgemäßen EVSE-Einrichtungen (Electric Vehicle Supply Equipment) mit entsprechenden Steckverbindern wird durch mechanische Tasten bzw. elektromechanische Verriegelungen das Abziehen des Ladekabels unter Last verhindert. Beispielsweise wird beim Betätigen einer entsprechenden mechanischen Taste gleichzeitig ein Schalter betätigt, der die Energieübertragung vor dem Abziehen des Ladekabels unterbricht. Bei Verwendung einer elektromechanischen Verriegelung gibt diese den Stecker erst frei, wenn der Ladevorgang ordnungsgemäß beendet, oder durch Benutzereingriff (z.B. Betätigen eines Schalters) unterbrochen wurde.

Allerdings kann damit das Elektrofahrzeug bzw. Hybridfahrzeug lediglich an speziellen EVSE-Einrichtungen und nicht an jeder beliebigen Standardsteckdose aufgeladen werden. Der Bedienungskomfort derartiger Fahrzeuge ist daher stark eingeschränkt.

### Offenbarung der Erfindung

Die vorliegende Erfindung stellt daher einen elektrischen Stecker entsprechend dem Gegenstand des unabhängigen Anspruchs 1 bereit. Vorteilhafte Ausführungsbeispiele sind in den abhängigen Ansprüchen definiert.

### Vorteile der Erfindung

Durch die Erfassungseinheit des elektrischen Steckers kann ein Lösen der Steckverbindung rechtzeitig erkannt werden und infolgedessen ein Abschaltsignal zum Unterbrechen der Energieübertragung bereitgestellt werden. Damit wird die Bildung eines Lichtbogens verhindert. Ferner besteht keine Verbrennungsgefahr für den Anwender. Darüber hinaus werden Schäden an dem elektrischen Stecker und der zugeordneten Kontaktbuchse vermieden.

Die Handhabung des elektrischen Steckers ist sehr einfach, da keine speziellen mechanischen Tasten betätigt werden müssen, um die Steckverbindung zu lösen. Außerdem kann der Stecker jederzeit von der Kontaktbuchse getrennt werden. Es ist nicht notwendig abzuwarten, bis z.B. ein Ladevorgang ordnungsgemäß beendet wurde, bevor der Stecker von der Kontaktbuchse abgezogen wird.

Zusätzlich bietet der erfindungsgemäße elektrische Stecker die Möglichkeit, Standardsteckdosen als Kontaktbuchse zu verwenden. Damit kann jede Standardsteckdose z.B. zum Laden eines Elektrofahrzeugs genutzt werden. Die Bedienungsfreundlichkeit des Elektrofahrzeugs/Hybridfahrzeugs wird damit signifikant erhöht.

Besonders bevorzugt ist es, wenn die Erfassungseinheit dazu ausgebildet ist, das Abschaltsignal bereitzustellen, sofern die Zugkraft einen Kraftschwellenwert und/oder die Bewegung einen Bewegungsschwellenwert überschreitet.

Durch diese Maßnahme wird ein Lösen der Steckverbindung zuverlässig erkannt. Geringfügige Zugkräfte am Stecker bzw. kleine Bewegungen/Erschütterungen des Steckers führen nicht zu einem Abschalten der Energieübertragung. Dadurch kann die Stabilität der Energieübertragung erhöht werden.

In einer weiteren Ausführungsform sind die Schwellenwerte derart festgelegt, dass die Steckverbindung mit der zugeordneten Kontaktbuchse zumindest bis zum Erreichen der Schwellenwerte besteht.

Dadurch wird erreicht, dass der elektrische Kontakt zwischen dem Stecker und der Kontaktbuchse erst dann getrennt wird, wenn die Energieübertragung bereits unterbrochen ist. Durch diese Maßnahme können keine Lichtbögen mehr entstehen. Infolgedessen besteht keine Gefahr von Verbrennungen des Anwenders oder ungewollten Entzündungen brennbarer Materialien. Eine Beschädigung des elektrischen Steckers und der zugeordneten Kontaktbuchse beim Abziehen des elektrischen Steckers wird verhindert.

Gemäß der Erfindung weist die Erfassungseinheit eine Kraftmesseinrichtung auf, die mit dem Kontaktstift mechanisch gekoppelt ist und die dazu ausgebildet ist, die Zugkraft auf der Grundlage einer Kraft zwischen dem Kontaktstift und der Kontaktbuchse beim Lösen der Steckverbindung zu erfassen.

Erfindungsgemäss wird die Zugkraft direkt an dem Kontaktstift ermittelt. Überschreitet die Zugkraft den Kraftschwellenwert, dann wird ein Lösen der Steckverbindung detektiert und ein Abschaltsignal zum Abschalten der Energieübertragung generiert.

In einer weiteren Ausführungsform ist die Kraftmesseinrichtung dazu ausgebildet, eine Druckkraft zwischen dem Kontaktstift und der Kontaktbuchse beim Bereitstellen der Steckverbindung zu erfassen, wobei der Kraftschwellenwert ein erfasster Wert der Druckkraft beim Bereitstellen der Steckverbindung ist.

Durch diese Maßnahme kann der Kraftschwellenwert sehr einfach bestimmt werden, indem die Druckkraft gemessen wird, die für das Bereitstellen der Steckverbindung notwendig ist. Überschreitet die Zugkraft den derart ermittelten Kraftschwellenwert, so kann sehr zuverlässig auf ein Lösen der Steckverbindung geschlossen werden.

Gemäß einer weiteren Ausführungsform weist die Erfassungseinheit ein verschiebbares Element auf, das mittels einer Vorspannkraft in einer Ausgangsposition gehalten ist und das aus der Ausgangsposition herausbewegbar ist, sofern die Zugkraft die Vorspannkraft überschreitet, wobei die Vorspannkraft der Kraftschwellenwert ist.

In dieser Ausführungsform wird das verschiebbare Element solange in der Ausgangsposition gehalten, bis die Zugkraft den Kraftschwellenwert überschreitet. Bei Überschreiten des Kraftschwellenwerts wird das verschiebbare Element aus der Ausgangsposition herausbewegt und das Lösen der Steckverbindung erkannt. Somit kann rechtzeitig vor dem Trennen des elektrischen Kontakts zwischen dem Stecker und der Kontaktbuchse die Energieübertragung mittels des Abschaltsignals unterbrochen werden.

Gemäß einer weiteren Ausführungsform weist die Erfassungseinheit ein Federelement zum Bereitstellen der Vorspannkraft auf.

Durch das Federelement kann die Vorspannkraft sehr einfach und kostengünstig bereitgestellt werden.

In einer weiteren Ausführungsform weist die Erfassungseinheit eine Schiebevorrichtung auf, die auf der Grundlage der Bewegung des Kontaktstifts verschiebbar ist, wobei die Erfassungseinheit dazu ausgebildet ist, das Abschaltsignal bereitzustellen, sofern die Schiebevorrichtung gegenüber einer Ausgangsstellung um den Bewegungsschwellenwert verschoben ist.

In dieser Ausführungsform wird ein Lösen der Steckverbindung erkannt, sobald die Schiebevorrichtung um den Bewegungsschwellenwert, d.h. um eine vordefinierte Wegstrecke, gegenüber der Ausgangsstellung verschoben ist. Der Bewegungsschwellenwert wird vorteilhafterweise so gewählt, dass der Stecker in dieser Position noch elektrisch mit der Kontaktbuchse verbunden ist. Somit kann eine Beschädigung des Steckers bzw. der Kontaktbuchse durch eine eventuelle Lichtbogenbildung vermieden werden.

Gemäß einer weiteren Ausführungsform ist die Erfassungseinheit dazu ausgebildet, ein Einschaltsignal zum Starten der Energieübertragung bereitzustellen, sofern die Ausgangsstellung der Schiebevorrichtung eingestellt ist.

Mittels der Schiebevorrichtung kann sehr einfach detektiert werden, ob der Stecker vollständig in der Kontaktbuchse aufgenommen ist. Befindet sich die Schiebevorrichtung in der Ausgangsstellung, so wird das Herstellen der Steckverbindung erkannt und das Einschaltsignal generiert, um die Energieübertragung zu starten.

Gemäß einer weiteren Ausführungsform weist die Erfassungseinheit ein weiteres Federelement auf, das dazu ausgebildet ist, eine Kraft auf die Schiebevorrichtung auszuüben, um die Schiebevorrichtung entsprechend der Bewegung des Kontaktstifts zu verschieben.

Durch diese Maßnahme wird die Schiebevorrichtung zumindest über einen vordefinierten Bereich synchron zu der Bewegung des Kontaktstifts (relativ zu der Kontaktbuchse) verschoben. Damit kann das Lösen/Bereitstellen der Steckverbindung zuverlässig erkannt werden.

In einer weiteren Ausführungsform weist die Schiebevorrichtung eine Hülse auf, die konzentrisch zu dem Kontaktstift angeordnet ist.

Dies stellt eine einfache und kostengünstige Realisierung der Schiebevorrichtung dar.

In einer weiteren Ausführungsform ist die Erfassungseinheit dazu ausgebildet, das Abschaltsignal und/oder das Einschaltsignal einer Steuereinheit zum Steuern der Energieübertragung zur Verfügung zu stellen.

Eine mit der Erfassungseinheit gekoppelte Steuereinheit kann die Energieübertragung anhand des bereitgestellten Abschaltsignals/Einschaltsignals abschalten bzw. starten. Als Steuereinheit kann z.B. ein bereits vorhandenes Ladesteuergerät eines Elektrofahrzeugs genutzt werden. Alternativ kann auch eine separate Steuereinheit vorgesehen werden, die als Teil einer Energieübertragungsanordnung (bspw. als Teil eines Ladekabels) ausgebildet ist.

In einer Ausführungsform der Energieübertragungsanordnung ist die elektrische Leitung ferner mit einer Traktionsbatterie eines elektrisch antreibbaren Fahrzeugs gekoppelt, wobei die Steuereinheit dazu ausgebildet ist, einen Ladevorgang der Traktionsbatterie auf der Grundlage des Abschaltsignals zu unterbrechen.

Dies stellt eine bevorzugte Ausführungsform der erfindungsgemäßen Energieübertragungsanordnung dar. Dabei ist die elektrische Leitung vorzugsweise mittels eines geeigneten Ladegeräts mit der Traktionsbatterie gekoppelt. Damit kann ein elektrisch angetriebenes Fahrzeug an jeder beliebigen Standardsteckdose geladen werden. Spezielle Entriegelungs-/Verriegelungsmechanismen sind nicht erforderlich. Der elektrische Stecker kann jederzeit von der zugeordneten Kontaktbuchse getrennt werden, ohne dass eine Gefahr einer Lichtbogenbildung besteht.

Es versteht sich, dass die Merkmale, Eigenschaften und Vorteile des erfindungsgemäßen elektrischen Steckers auch entsprechend auf die erfindungsgemäße Energieübertragungsanordnung zutreffen bzw. anwendbar sind.

### Kurze Beschreibung der Zeichnungen

Fig. 1 zeigt in schematischer Form ein elektrisch angetriebenes Fahrzeug, das mittels einer Energieübertragungsanordnung mit einer Ladestation koppelbar ist;
Fig. 2 zeigt in schematischer Form eine detaillierte Ansicht der Energieübertragungsanordnung mit einem elektrischen Stecker; und
Figuren 3 bis 5 zeigen in schematischer Ansicht verschiedene Ausführungsformen des elektrischen Steckers.

### Ausführungsformen der Erfindung

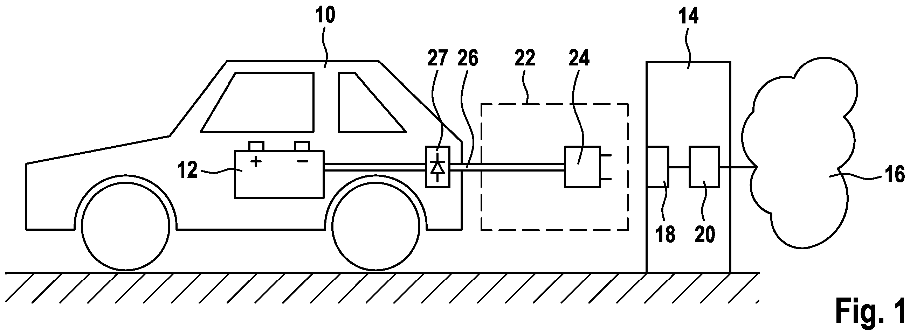

In Fig. 1 ist ein Elektrofahrzeug schematisch dargestellt und generell mit 10 bezeichnet. In einem alternativen Ausführungsbeispiel kann das Fahrzeug 10 auch ein Plug-in-Hybridfahrzeug sein. Das Elektrofahrzeug 10 weist typischerweise eine in Fig. 1 nicht näher bezeichnete elektrische Drehfeldmaschine auf, die als Antriebsmotor verwendet wird. Ferner weist das Elektrofahrzeug 10 eine Traktionsbatterie 12 auf, die elektrische Energie für das Betreiben der elektrischen Drehfeldmaschine bereitstellt. Nach einer bestimmten Betriebsdauer des Elektrofahrzeugs 10 muss die Traktionsbatterie 12 wieder aufgeladen werden. Dazu wird das Elektrofahrzeug 10 an eine Ladestation 14 angeschlossen, die wiederum mit einem elektrischen Energieversorgungsnetz 16 gekoppelt ist. Die Ladestation 14 weist eine Kontaktbuchse 18 auf, die im vorliegenden Beispiel einer Standardsteckdose entspricht und die zum Anschließen des Elektrofahrzeugs 10 an die Ladestation 14 dient. Des Weiteren weist die Ladestation 14 eine Energieübertragungseinheit 20 auf, mittels der die Kontaktbuchse 18 mit dem Energieversorgungsnetz 16 gekoppelt ist.

Zum Laden des Elektrofahrzeugs 10 wird die Traktionsbatterie 12 mit Hilfe einer Energieübertragungsanordnung 22, im vorliegenden Fall mit Hilfe eines Ladekabels 22 mit der Ladestation 14 elektrisch verbunden. Das Ladekabel 22 weist einen elektrischen Stecker 24 und eine elektrische Leitung 26 auf, die an einem Ende mit dem Stecker 24 elektrisch gekoppelt ist. Das andere Ende der elektrischen Leitung 26 ist mittels eines Ladegeräts 27 mit der Traktionsbatterie 12 des Elektrofahrzeugs 10 elektrisch verbunden. Zum Herstellen eines elektrischen Kontakts zwischen dem Elektrofahrzeug 10 und dem Energieversorgungsnetz 16 wird der Stecker 24 in die Kontaktbuchse 18 eingesteckt.

Zum Beenden des Ladevorgangs der Traktionsbatterie 12 (z.B. weil das Elektrofahrzeug 10 für eine Fahrt benötigt wird) muss der Stecker 24 aus der Kontaktbuchse 18 gelöst werden. Erfindungsgemäß ist der Stecker 24 dazu ausgebildet, ein Lösen der Steckverbindung zwischen dem elektrischen Stecker 24 und der Kontaktbuchse 18 frühzeitig zu erkennen und aufgrund dessen ein Abschaltsignal bereitzustellen, um die Energieübertragung zwischen der Traktionsbatterie 12 und dem Energieversorgungsnetz 16 zu unterbrechen bevor die elektrische Verbindung zwischen dem Stecker 24 und der Kontaktbuchse 18 aufgetrennt wird. Somit kann eine Bildung eines Lichtbogens zwischen dem Stecker 24 und der Kontaktbuchse 18 vermieden werden. Es besteht somit keine Verbrennungsgefahr für den Anwender des Ladekabels 22. Außerdem werden der Stecker 24 und die Kontaktbuchse 18 vor Beschädigungen geschützt.

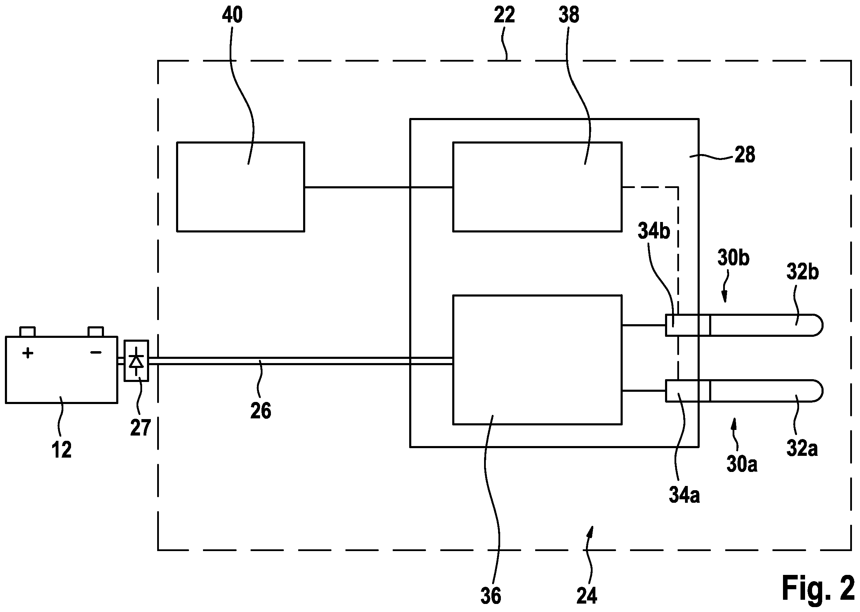

Zur näheren Erläuterung ist in Fig. 2 eine detaillierte Ansicht der Energieübertragungsanordnung 22 bzw. des Ladekabels 22 gezeigt.

Der Stecker 24 weist ein Steckergehäuse 28 auf, in dem zwei Kontaktstifte 30a, 30b teilweise aufgenommen sind. Die Kontaktstifte 30a, 30b weisen jeweils einen Steckabschnitt 32a, 32b und einen Kopplungsabschnitt 34a, 34b auf. Die Steckabschnitte 32a, 32b sind dazu ausgebildet, eine lösbare Steckverbindung mit der Kontaktbuchse 18 bereitzustellen, um die Kontaktstifte 30a, 30b elektrisch mit der Kontaktbuchse 18 zu koppeln. Die Kopplungsabschnitte 34a, 34b sind mit einer Anschlusseinheit 36 gekoppelt, die die Kontaktstifte 30a, 30b zum Übertragen von elektrischer Energie mit der elektrischen Leitung 26 elektrisch koppelt.

Erfindungsgemäß weist der elektrische Stecker 24 außerdem eine Erfassungseinheit 38 auf, die dazu ausgebildet ist, eine Zugkraft, die auf die Kontaktstifte 30 ausgeübt wird, zu erfassen. Zusätzlich oder alternativ kann die Erfassungseinheit 38 dazu ausgebildet sein, eine Bewegung der Kontaktstifte 30 relativ zu der Kontaktbuchse 18 zu erfassen.

Soll der Stecker 24 aus der Kontaktbuchse 18 herausgezogen werden, so muss eine bestimmte Zugkraft auf den Stecker 24 ausgeübt werden. Die Erfassungseinheit 38 misst z.B. die auf die Kontaktstifte 30 wirkende Kraft und vergleicht diese mit einem Kraftschwellenwert. Überschreitet die gemessene Zugkraft den Kraftschwellenwert, so wird ein Lösen der Steckverbindung zwischen dem Stecker 24 und der Kontaktbuchse 18 erkannt. Infolgedessen generiert die Erfassungseinheit 38 ein Abschaltsignal und übermittelt dieses an eine Steuereinheit 40. Auf der Grundlage des Abschaltsignals unterbricht die Steuereinheit 40 die Energieübertragung zwischen dem Energieversorgungsnetz 16 und der Traktionsbatterie 12 bevor die elektrische Verbindung zwischen den Kontaktstiften 30 und der Kontaktbuchse 18 aufgetrennt wird. Somit wird die Lichtbogenbildung verhindert. Die Steuereinheit 40 ist in diesem Ausführungsbeispiel als separate Einheit vorgesehen, die zusammen mit dem Stecker 24 einen Teil des Ladekabels 22 bildet. In einer alternativen Ausführungsform kann auch ein in dem Elektrofahrzeug 10 bereits vorhandenes Ladesteuergerät zur Steuerung der Energieübertragung in Abhängigkeit des Abschaltsignals eingesetzt werden.

Des Weiteren besteht die Möglichkeit, mittels der Erfassungseinheit 38 die Bewegung der Kontaktstifte 30 relativ zu der Kontaktbuchse 18 zu erfassen. Wird die Steckverbindung zwischen dem elektrischen Stecker und der Kontaktbuchse 18 gelöst, so müssen die Kontaktstifte 30 aus der Kontaktbuchse 18 herausgezogen werden. Überschreitet die erfasste Bewegung der Kontaktstifte 30 einen vordefinierten Bewegungsschwellenwert (d.h. eine vordefinierte maximale Wegstrecke), so wird das Lösen der Steckverbindung erkannt und das Abschaltsignal erzeugt und an die Steuereinheit 40 weitergeleitet.

Der Kraftschwellenwert und der Bewegungsschwellenwert werden dabei vorzugsweise so dimensioniert, dass ein Lösen der Steckverbindung erkannt wird und damit ein Abschalten der Energieübertragung zwischen der Traktionsbatterie 12 und dem Energieversorgungsnetz 16 erfolgen kann, bevor der elektrische Kontakt zwischen den Kontaktstiften 30 und der Kontaktbuchse 18 aufgetrennt wird. Allerdings müssen die Schwellenwerte zur Stabilisierung der Energieübertragung so groß gewählt werden, dass der Ladevorgang der Traktionsbatterie 12 nicht bei kleinen Erschütterungen des Steckers 24 unterbrochen wird.

Ferner kann mit Hilfe der Erfassungseinheit 38 festgestellt werden, ob der Stecker 24 in die Kontaktbuchse 18 eingesteckt wird und damit am Ende des Einsteckvorgangs vollständig in der Kontaktbuchse 18 aufgenommen ist. Dazu erfasst die Erfassungseinheit 38 wiederum die Bewegung der Kontaktstifte 30 relativ zu der Kontaktbuchse 18. Bei Erreichen einer bestimmten Position der Kontaktstifte 30 relativ zu der Kontaktbuchse 18, wird das Einstecken des Steckers 24 in die Kontaktbuchse 18 erkannt und ein Einschaltsignal generiert, das an die Steuereinheit 40 zum Starten des Ladevorgangs der Traktionsbatterie 12 weitergeleitet wird.

Mit Hilfe des kontrollierten Einschaltens bzw. Abschaltens der Energieübertragung wird die größtmögliche Betriebssicherheit des Ladekabels 22 gewährleistet.

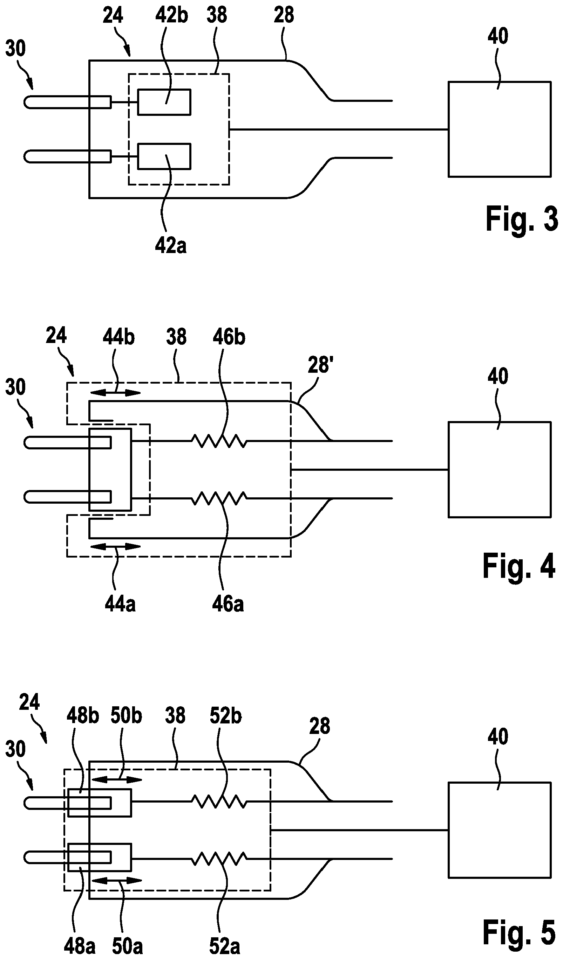

In den folgenden Figuren 3 bis 5 sind in schematischer Ansicht verschiedene Ausführungsformen des elektrischen Steckers 24 und insbesondere der erfindungsgemäßen Erfassungseinheit 38 gezeigt. Da der Fokus der folgenden Figuren auf den verschiedenen Realisierungsformen der Erfassungseinheit 38 liegt, sind die anderen Elemente des Steckers 24 aus Gründen der Übersichtlichkeit in diesen Figuren nicht dargestellt.

Die Fig. 3 zeigt den Stecker 24 mit dem Steckergehäuse 28 und den Kontaktstiften 30. In diesem Ausführungsbeispiel weist die Erfassungseinheit 38 Kraftmesseinrichtungen 42a, 42b auf, die jeweils mit einem der Kontaktstifte 30a, 30b mechanisch gekoppelt sind. Mit Hilfe der Kraftmesseinrichtungen 42 kann die auf die Kontaktstifte 30 ausgeübte Kraft beim Lösen/Bereitstellen der Steckverbindung gemessen werden. Wird der Stecker 24 bspw. aus der Kontaktbuchse 18 herausgezogen, so erfassen die Kraftmesseinrichtungen 42 die auf die Kontaktstifte 30 ausgeübten Zugkräfte. Überschreiten die gemessenen Zugkräfte den vordefinierten Kraftschwellenwert, wird das Lösen der Steckverbindung erkannt und das Abschaltsignal an die Steuereinheit 40 übermittelt. Der Kraftschwellenwert wird in dieser Ausführungsform vorzugsweise derart ermittelt, dass die Kraftmesseinrichtungen 42 eine Druckkraft beim Bereitstellen der Steckverbindung erfassen. Die erfasste Druckkraft wird dann als Kraftschwellenwert in der Erfassungseinheit 38 abgespeichert. Somit wird in dieser Ausführungsform das Abschaltsignal an die Steuereinheit 40 übermittelt, sofern die erfasste Zugkraft beim Lösen der Steckverbindung die Druckkraft beim Bereitstellen der Steckverbindung übersteigt. Dabei ist es unerheblich, ob die Zugkraft durch ein direktes Abziehen des Steckers 24 oder durch einen Zug an der elektrischen Leitung 26 verursacht wird.

In Fig. 4 ist eine weitere Ausführungsform des erfindungsgemäßen Steckers 24 gezeigt. Die Erfassungseinheit 38 weist ein verschiebbares Element 28' auf, das in dem vorliegenden Beispiel dem Steckergehäuse 28' oder einem Teil des Steckergehäuses 28' entspricht. Das verschiebbare Element ist, wie mit den Pfeilen 44a, 44b aus Fig. 4 angedeutet, verschiebbar zu den Kontaktstiften 30 gelagert. Die Erfassungseinheit 38 weist außerdem Federelemente 46a, 46b auf, die eine Vorspannkraft auf das verschiebbare Element 28' ausüben, um das verschiebbare Element 28' in einer in Fig. 4 dargestellten Ausgangsposition zu halten.

Bei einem Herausziehen des elektrischen Steckers 24 aus der Kontaktbuchse 18 wird das Steckergehäuse 28' bzw. das verschiebbare Element 28' mit einer Zugkraft beaufschlagt. Übersteigt diese Zugkraft die mittels der Federelemente bereitgestellte Vorspannkraft, die in diesem Ausführungsbeispiel den Kraftschwellenwert darstellt, so wird das verschiebbare Element 28' aus der in Fig. 4 dargestellten Ausgangsposition nach rechts herausbewegt. Dadurch kann bspw. ein in Fig. 4 nicht näher bezeichneter Schalter der Erfassungseinheit 38 betätigt werden, der das Abschaltsignal erzeugt. Somit kann die Energieübertragung über die elektrische Leitung 26 mittels der Steuereinheit 40 unterbrochen werden, bevor die elektrische Verbindung zwischen den Kontaktstiften 30 und der Kontaktbuchse 18 aufgetrennt wird.

In Fig. 5 ist eine weitere Ausführungsform des erfindungsgemäßen Steckers 24 gezeigt. Die Erfassungseinheit 38 weist Schiebevorrichtungen 48a, 48b auf, die verschiebbar zu den Kontaktstiften 30 gelagert sind (siehe Pfeile 50a, 50b in Fig. 5). Die Schiebevorrichtungen 48a, 48b sind in diesem Ausführungsbeispiel als Hülsen 48a, 48b ausgebildet, die konzentrisch zu den jeweiligen Kontaktstiften 30a, 30b angeordnet sind. Ferner weist die Erfassungseinheit 38 weitere Federelemente 52a, 52b auf, die sich an dem Steckergehäuse 28 abstützen und eine Druckkraft (in Fig. 5 eine Kraft nach links) auf die Hülsen 48a, 48b ausüben.

Wird der Stecker 24 in die Kontaktbuchse 18 eingesteckt, so stützen sich die Hülsen 48 an einem Grund der Kontaktbuchse 18 ab. Dadurch werden die Hülsen 48 im Verlauf des Einsteckvorgangs vollständig in das Steckergehäuse 28 hineingedrückt. Sobald eine vordefinierte Endposition der Hülsen 48 erreicht ist, wird mittels der Erfassungseinheit 38 das Einstecken des Steckers 24 in die Kontaktbuchse 18 detektiert und das Einschaltsignal an die Steuereinheit 40 übermittelt. Aufgrund des Einschaltsignals kann die Steuereinheit 40 die Energieübertragung starten.

Beim Abziehen des Steckers 24 von der Kontaktbuchse 18 werden die Hülsen 48 mittels der weiteren Federelemente 52 wieder auf dem Steckergehäuse 28 herausgedrückt. Überschreiten die Hülsen 48 bei dieser Bewegung eine vordefinierte Wegstrecke, d.h. einen vordefinierten Bewegungsschwellenwert, so wird das Lösen der Steckverbindung von der Erfassungseinheit 38 erkannt und ein Abschaltsignal generiert, das an die Steuereinheit 40 zum Abschalten der Energieübertragung übermittelt wird.

Somit kann in dieser Ausführungsform die Bewegung der Kontaktstifte 30 relativ zu der Kontaktbuchse 18 mittels der Hülsen 48 erfasst werden. Das Abschaltsignal/Einschaltsignal wird in Abhängigkeit dieser erfassten Bewegung der Kontaktstifte 30 erzeugt.

Obgleich somit bevorzugte Ausführungsformen des erfindungsgemäßen Steckers 24 und der erfindungsgemäßen Energieübertragungsanordnung 22 gezeigt worden sind, versteht sich, dass verschiedene Abwandlungen und Modifikationen vorgenommen werden können, ohne den Rahmen der Erfindung zu verlassen.

Beispielsweise kann von der Erfassungseinheit 38 lediglich ein Kraftmesssignal oder ein Bewegungssignal zur Verfügung gestellt werden, das anschließend in der Steuereinheit 40 anhand eines Vergleichs mit vordefinierten Schwellenwerten ausgewertet wird. Damit wird in der Steuereinheit 40 das Lösen/Bereitstellen der Steckverbindung erkannt und infolgedessen das Abschalten/Starten der Energieübertragung initiiert.

Außerdem besteht die Möglichkeit, mehrere unterschiedliche Ausführungsformen der Erfassungseinheit 38 miteinander zu kombinieren, um somit die Zuverlässigkeit der Erkennung eines Lösens/Bereitstellens der Steckverbindung zu erhöhen.

Des Weiteren versteht sich, dass der erfindungsgemäße Stecker 24 bzw. die erfindungsgemäße Energieübertragungsanordnung 22 nicht nur bei Ladekabeln für Elektrofahrzeuge/Plug-in-Hybridfahrzeuge, sondern bei beliebigen Elektrogeräten, wie z.B. Haushaltsgeräten oder Elektrowerkzeugen, eingesetzt werden können. Besonders vorteilhaft ist die Verwendung des erfindungsgemäßen elektrischen Steckers bei allen Elektrogeräten, die einen hohen Stromverbrauch aufweisen.

## Patentansprüche

1. Elektrischer Stecker (24) mit:
- einer Anschlusseinheit (36), die zum Übertragen von elektrischer Energie mit einer elektrischen Leitung (26) koppelbar ist, und
- wenigstens einem elektrischen Kontaktstift (30), der einen Steckabschnitt (32) und einen Kopplungsabschnitt (34) aufweist, wobei der Kopplungsabschnitt (34) mit der Anschlusseinheit (36) elektrisch gekoppelt ist und wobei der Steckabschnitt (32) dazu ausgebildet ist, eine lösbare Steckverbindung mit einer zugeordneten Kontaktbuchse (18) bereitzustellen, um den Kontaktstift (30) elektrisch mit der Kontaktbuchse (18) zu koppeln, und
- eine Erfassungseinheit (38), die dazu ausgebildet ist, eine Zugkraft, die auf den Kontaktstift (30) ausgeübt wird, und optional eine Bewegung des Kontaktstifts (30) relativ zu der Kontaktbuchse (18) zu erfassen und ein Abschaltsignal zum Unterbrechen der Energieübertragung bereitzustellen,
**dadurch gekennzeichnet dass**
die Erfassungseinheit (38) eine Kraftmesseinrichtung (42) aufweist, die mit dem Kontaktstift (30) mechanisch gekoppelt ist und die dazu ausgebildet ist, die Zugkraft auf der Grundlage einer Kraft zwischen dem Kontaktstift (30) und der Kontaktbuchse (18) beim Lösen der Steckverbindung zu erfassen.

2. Elektrischer Stecker nach Anspruch 1, wobei die Erfassungseinheit (38) dazu ausgebildet ist, das Abschaltsignal bereitzustellen, sofern die Zugkraft einen Kraftschwellenwert und/oder die Bewegung einen Bewegungsschwellenwert überschreitet.

3. Elektrischer Stecker nach Anspruch 2, wobei die Schwellenwerte derart festgelegt sind, dass die Steckverbindung mit der zugeordneten Kontaktbuchse (18) zumindest bis zum Erreichen der Schwellenwerte besteht.

4. Elektrischer Stecker nach einem der Ansprüche 1 bis 3, wobei die Kraftmesseinrichtung (42) dazu ausgebildet ist, eine Druckkraft zwischen dem Kontaktstift (30) und der Kontaktbuchse (18) beim Bereitstellen der Steckverbindung zu erfassen und wobei der Kraftschwellenwert ein erfasster Wert der Druckkraft beim Bereitstellen der Steckverbindung ist.

5. Elektrischer Stecker nach einem der Ansprüche 1 bis 4, wobei die Erfassungseinheit (38) ein verschiebbares Element (28') aufweist, das mittels einer Vorspannkraft in einer Ausgangsposition gehalten ist und das aus der Ausgangsposition herausbewegbar ist, sofern die Zugkraft die Vorspannkraft überschreitet, und wobei die Vorspannkraft der Kraftschwellenwert ist.

6. Elektrischer Stecker nach Anspruch 5, wobei die Erfassungseinheit (38) ein Federelement (46) zum Bereitstellen der Vorspannkraft aufweist.

7. Elektrischer Stecker nach einem der Ansprüche 1 bis 6, wobei die Erfassungseinheit (38) eine Schiebevorrichtung (48) aufweist, die auf der Grundlage der Bewegung des Kontaktstifts (30) verschiebbar ist, und wobei die Erfassungseinheit (38) dazu ausgebildet ist, das Abschaltsignal bereitzustellen, sofern die Schiebevorrichtung (48) gegenüber einer Ausgangsstellung um den Bewegungsschwellenwert verschoben ist.

8. Elektrischer Stecker nach Anspruch 7, wobei die Erfassungseinheit (38) dazu ausgebildet ist, ein Einschaltsignal zum Starten der Energieübertragung bereitzustellen, sofern die Ausgangsstellung der Schiebevorrichtung (48) eingestellt ist.

9. Elektrischer Stecker nach Anspruch 7 oder 8, wobei die Erfassungseinheit (38) ein weiteres Federelement (52) aufweist, das dazu ausgebildet ist, eine Kraft auf die Schiebevorrichtung (48) auszuüben, um die Schiebevorrichtung (48) entsprechend der Bewegung des Kontaktstifts (30) zu verschieben.

10. Elektrischer Stecker nach einem der Ansprüche 7 bis 9, wobei die Schiebevorrichtung (48) eine Hülse aufweist, die konzentrisch zu dem Kontaktstift (30) angeordnet ist.

11. Elektrischer Stecker nach einem der Ansprüche 1 bis 10, wobei die Erfassungseinheit (38) dazu ausgebildet ist, das Abschaltsignal und/oder das Einschaltsignal einer Steuereinheit (40) zum Steuern der Energieübertragung zur Verfügung zu stellen.

12. Energieübertragungsanordnung (22) mit
- einem elektrischen Stecker (24) nach einem der Ansprüche 1 bis 11,
- einer elektrischen Leitung (26), die mit der Anschlusseinheit (36) des elektrischen Steckers (24) elektrisch gekoppelt ist, und
- einer Steuereinheit (40), die mit der Erfassungseinheit (38) des elektrischen Steckers (24) elektrisch gekoppelt ist und die dazu ausgebildet ist, die Übertragung von elektrischer Energie über die elektrische Leitung (26) auf der Grundlage des Abschaltsignals und/oder des Einschaltsignals der Erfassungseinheit (38) zu steuern.

13. Energieübertragungsanordnung nach Anspruch 12, wobei die elektrische Leitung (26) ferner mit einer Traktionsbatterie (12) eines elektrisch antreibbaren Fahrzeugs (10) gekoppelt ist und wobei die Steuereinheit (40) dazu ausgebildet ist, einen Ladevorgang der Traktionsbatterie (12) auf der Grundlage des Abschaltsignals zu unterbrechen.

## Claims

1. Electrical plug (24) comprising:
- a connection unit (36) which can be coupled to an electrical line (26) for transmitting electrical energy, and
- at least one electrical contact pin (30) which has a plug-in section (32) and a coupling section (34), wherein the coupling section (34) is electrically coupled to the connection unit (36) and wherein the plug-in section (32) is designed to provide a releasable plug-in connection to an associated contact bushing (18) in order to electrically couple the contact pin (30) to the contact bushing (18), and
- a detection unit (38) which is designed to detect a tensile force, which is exerted onto the contact pin (30), and optionally a movement of the contact pin (30) relative to the contact bushing (18) and to provide a switch-off signal for interrupting the energy transmission,
**characterized in that**
the detection unit (38) has a force-measuring device (42) which is mechanically coupled to the contact pin (30) and which is designed to detect the tensile force on the basis of a force between the contact pin (30) and the contact bushing (18) when the plug-in connection is released.

2. Electrical plug according to Claim 1, wherein the detection unit (38) is designed to provide the switch-off signal, provided that the tensile force exceeds a force threshold value and/or the movement exceeds a movement threshold value.

3. Electrical plug according to Claim 2, wherein the threshold values are defined in such a way that the plug-in connection to the associated contact bushing (18) exists at least until the threshold values are reached.

4. Electrical plug according to one of Claims 1 to 3, wherein the force-measuring device (42) is designed to provide a pressure force between the contact pin (30) and the contact bushing (18) when the plug-in connection is provided, and wherein the force threshold value is a detected value of the pressure force when the plug-in connection is provided.

5. Electrical plug according to one of Claims 1 to 4, wherein the detection unit (38) has a displaceable element (28') which is held in a starting position by means of a pretensioning force and which can be moved out of the starting position, provided that the tensile force exceeds the pretensioning force, and wherein the pretensioning force is the force threshold value.

6. Electrical plug according to Claim 5, wherein the detection unit (38) has a spring element (46) for providing the pretensioning force.

7. Electrical plug according to one of Claims 1 to 6, wherein the detection unit (38) has a sliding device (48) which can be displaced on the basis of the movement of the contact pin (30), and wherein the detection unit (38) is designed to provide the switch-off signal, provided that the sliding device (48) is displaced in relation to a starting position by the movement threshold value.

8. Electrical plug according to Claim 7, wherein the detection unit (38) is designed to provide a switch-on signal for starting energy transmission, provided that the starting position of the sliding device (48) is set.

9. Electrical plug according to Claim 7 or 8, wherein the detection unit (38) has a further spring element (52) which is designed to exert a force onto the sliding device (48) in order to displace the sliding device (48) in accordance with the movement of the contact pin (30).

10. Electrical plug according to one of Claims 7 to 9, wherein the sliding device (48) has a sleeve which is arranged concentrically in relation to the contact pin (30) .

11. Electrical plug according to one of Claims 1 to 10, wherein the detection unit (38) is designed to make available the switch-off signal and/or the switch-on signal of a control unit (40) for controlling the energy transmission.

12. Energy transmission arrangement (22) comprising
- an electrical plug (24) according to one of Claims 1 to 11,
- an electrical line (26) which is electrically coupled to the connection unit (36) of the electrical plug (24), and
- a control unit (40) which is electrically coupled to the detection unit (38) of the electrical plug (24) and which is designed to control the transmission of electrical energy via the electrical line (26) on the basis of the switch-off signal and/or of the switch-on signal of the detection unit (38).

13. Energy transmission arrangement according to Claim 12, wherein the electrical line (26) is further coupled to a traction battery (12) of an electrically driveable vehicle (10), and wherein the control unit (40) is designed to interrupt a charging process of the traction battery (12) on the basis of the switch-off signal.

## Revendications

1. Fiche électrique (24), comprenant :
- une unité de raccordement (36), qui peut être connectée à une ligne électrique (26) pour la transmission d'énergie électrique, et
- au moins une broche de contact (30) électrique, qui possède une portion d'enfichage (32) et une portion d'accouplement (34), la portion d'accouplement (34) étant connectée électriquement à l'unité de raccordement (36) et la portion d'enfichage (32) étant configurée pour fournir une connexion par enfichage amovible avec une douille de contact (18) associée afin de connecter électriquement la broche de contact (30) avec la douille de contact (18), et
- une unité de détection (38), qui est configurée pour détecter une force de traction qui est exercée sur la broche de contact (30) et, facultativement, un mouvement de la broche de contact (30) par rapport à la douille de contact (18) et fournir un signal de mise hors circuit destiné à interrompre la transmission d'énergie, **caractérisée en ce que**
l'unité de détection (38) possède un dispositif de mesure de force (42) qui est couplé mécaniquement à la broche de contact (30) et qui est configuré pour détecter la force de traction en se basant sur une force entre la broche de contact (30) et la douille de contact (18) lors de la séparation de la connexion par enfichage.

2. Fiche électrique selon la revendication 1, l'unité de détection (38) étant configurée pour fournir le signal de mise hors circuit du moment que la force de traction dépasse une valeur de seuil de force et/ou que le mouvement dépasse une valeur de seuil de mouvement.

3. Fiche électrique selon la revendication 2, les valeurs de seuil étant spécifiées de telle sorte que la connexion par enfichage avec la douille de contact (18) associée persiste au moins jusqu'à ce que les valeurs de seuil soient atteintes.

4. Fiche électrique selon l'une des revendications 1 à 3, le dispositif de mesure de force (42) étant configuré pour détecter une force de pression entre la broche de contact (30) et la douille de contact (18) lors de la fourniture de la connexion par enfichage et la valeur de seuil de force étant une valeur détectée de la force de pression lors de la fourniture de la connexion par enfichage.

5. Fiche électrique selon l'une des revendications 1 à 4, l'unité de détection (38) possédant un élément coulissant (28') qui est maintenu dans une position initiale au moyen d'une force de précontrainte et qui peut être déplacé hors de la position initiale du moment que la force de traction dépasse la force de précontrainte, la force de précontrainte étant la valeur de seuil de force.

6. Fiche électrique selon la revendication 5, l'unité de détection (38) possédant un élément ressort (46) destiné à fournir la force de précontrainte.

7. Fiche électrique selon l'une des revendications 1 à 6, l'unité de détection (38) possédant un système de coulissement (48) qui peut coulisser sur la base du mouvement de la broche de contact (30), et l'unité de détection (38) étant configurée pour fournir le signal de mise hors circuit du moment que le système de coulissement (48) coulisse de la valeur de seuil de mouvement par rapport à une position initiale.

8. Fiche électrique selon la revendication 7, l'unité de détection (38) étant configurée pour fournir un signal de mise en circuit destiné à démarrer la transmission d'énergie du moment que la position initiale du système de coulissement (48) est réglée.

9. Fiche électrique selon la revendication 7 ou 8, l'unité de détection (38) possédant un élément ressort supplémentaire (52) qui est configuré pour exercer une force sur le système de coulissement (48) en vue de faire coulisser le système de coulissement (48) en fonction du mouvement de la broche de contact (30).

10. Fiche électrique selon l'une des revendications 7 à 9, le système de coulissement (48) possédant un manchon qui est disposé de manière concentrique par rapport à la broche de contact (30).

11. Fiche électrique selon l'une des revendications 1 à 10, l'unité de détection (38) étant configurée pour mettre le signal de mise hors circuit et/ou le signal de mise en circuit à la disposition d'une unité de commande (40) en vue de commander la transmission d'énergie.

12. Arrangement de transmission d'énergie (22), comprenant
- une fiche électrique (24) selon l'une des revendications 1 à 11,
- une ligne électrique (26) qui est connectée électriquement à l'unité de raccordement (36) de la fiche électrique (24), et
- une unité de commande (40), qui est connectée électriquement à l'unité de détection (38) de la fiche électrique (24) et qui est configurée pour commander la transmission d'énergie électrique par le biais de la ligne électrique (26) en se basant sur le signal de mise hors circuit et/ou le signal de mise en circuit de l'unité de détection (38).

13. Arrangement de transmission d'énergie selon la revendication 12, la ligne électrique (26) étant en outre connectée à une batterie de traction (12) d'un véhicule (10) pouvant être propulsé à l'électricité et l'unité de commande (40) étant configurée pour interrompre une opération de charge de la batterie de traction (12) en se basant sur le signal de mise hors circuit.
